# EUROPÄISCHE PATENTSCHRIFT

(11) **EP 3 144 088 B1**
(45) Veröffentlichungstag und Bekanntmachung des Hinweises auf die Patenterteilung: **13.09.2017**
(21) Anmeldenummer: 16187052.2
(22) Anmeldetag: 02.09.2016
(51) Int. Cl.: B23D 55/08, B23D 53/08

(54) **BANDSÄGEMASCHINE UND VERFAHREN ZUM SÄGEN EINES METALLROHRS**
BAND SAW MACHINE, AND METHOD FOR THE SAWING OF A METAL PIPE
SCIE A RUBAN ET PROCEDE DE SCIAGE D'UN TUBE METALLIQUE

(30) Priorität: 18.09.2015 DE 102015115820
(43) Veröffentlichungstag der Anmeldung: 22.03.2017
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Krebber-Stolzer, Nicole-Désirée, 76530 Baden-Baden (DE); Krebber, Sönke Florian, 76530 Baden-Baden (DE)
(74) Vertreter: Lemcke, Brommer & Partner Patentanwälte Partnerschaft mbB

(56) Entgegenhaltungen:
- DE-A1- 19 712 695
- DE-A1-102013 210 573
- FR-A- 1 064 207

## Beschreibung

Die vorliegende Erfindung betrifft ein Verfahren zum Sägen eines Metallrohrs oder Hohlprofils mit einer Bandsägemaschine nach dem Oberbegriff des Patentanspruchs 1 sowie eine Bandsägemaschine zum Sägen eines Metallrohrs oder Hohlprofils nach dem Oberbegriff des Patentanspruchs 4.

Eine Bandsägemaschine der vorliegenden Art, die für das entsprechende Verfahren verwendet wird, umfasst ein feststehendes Sägenunterteil mit einem Sägetisch zum Auflegen und Fixieren eines zu sägenden Metallrohrs oder Hohlprofils sowie ein relativ zum Sägenunterteil bewegliches Sägenoberteil mit einem umlaufenden Sägeband, das mit einer Reihe von Sägezähnen bestückt und angetrieben ist, um eine quasi-endlose Sägebewegung durchzuführen. Mittels einer Vorschubbewegung des Sägenoberteils, die relativ zum Sägenunterteil erfolgt, dringt das Sägeband in das Metallrohr oder Hohlprofils ein und wird für einen Sägeschnitt durch dieses hindurchgeführt.

Bandsägemaschinen und Verfahren der eingangs genannten Art sind seit langem bekannt, beispielsweise aus der DE 39 27 275 A1, der DE 198 28 589 A1, der EP 1 029 623 A1 oder der DE 10 2013 210 573 A1. Gemeinsam ist diesen bekannten Bandsägemaschinen, dass das zu sägende Werkstück auf den Sägetisch gelegt und dort fixiert wird, wonach das Sägenoberteil mittels einer Schwenkbewegung oder einer linearen Bewegung zum Sägenunterteil hin bewegt wird, so dass auch das angetriebene Sägeband zum Werkstück hin bewegt wird, bis seine Sägezähne in dieses eindringt und schließlich der Sägeschnitt durchgeführt wird. Wenn die Sägezähne die Ebene des Sägetischs erreichen, ist der Sägeschnitt beendet und das Werkstück vollständig durchtrennt.

Da das Sägenoberteil den Antrieb für das umlaufende Sägeband enthält, und die Führungselemente für das Sägeband, üblicherweise zwei oder mehr Laufräder, aufgrund der hohen Schnittkräfte beim Sägeschnitt stabil und massiv ausgebildet sein müssen, weist das Sägenoberteil einer Bandsägemaschine der vorliegenden Art ein erhebliches Gewicht auf. Es ist daher üblich, die Vorschubbewegung im Wesentlichen durch die Gewichtskraft des Sägenoberteils zu erzeugen und sie durch abbremsende Maßnahmen zu regeln. Wenn das Sägenoberteil beispielsweise mittels hydraulischer Antriebe angehoben wird, um die Bandsägemaschine für einen neuen Sägeschnitt vorzubereiten, kann die Vorschubbewegung durch Ablassen des Hydrauliköls aus den hydraulischen Antrieben erzeugt werden, wobei die Bewegung durch Drosseln des Volumenstroms des Hydrauliköls geregelt werden kann.

Beim Sägen von Metallrohren oder Hohlprofilen mit zylindrischem oder polygonalem Querschnitt besteht das Problem, dass die beim Sägeschnitt anfallenden Sägespäne zum Teil in das Innere des Metallrohrs oder Hohlprofils hineinfallen und sich dort ablagern sowie gegebenenfalls im Laufe des Sägeschnitts ansammeln. Wenn nun bei zunehmendem Sägefortschritt das Sägeband in den Bereich des Metallrohrs oder Hohlprofils vordringt, in dem die heruntergefallenen Sägespäne liegen, können diese von den durchlaufenden Sägezähnen des Sägebands mitgenommen werden. An der Stelle, an der die Sägezähne nach Verlassen des Innenraums des Metallrohrs oder Hohlprofils wieder in dessen Wandung eindringen, können solche mitgenommenen Sägespäne Probleme bereiten, da sie beim Wiedereintritt in die Wandung des Metallrohrs oder Hohlprofils mit in den Schnittkanal gezogen werden. Hierdurch wird die Schnittoberfläche am Metallrohr oder Hohlprofil deutlich verschlechtert, und der Verschleiß des Sägebands erhöht sich. Bei mit Hartmetallplättchen besetzten Sägezähnen kann dies sogar zum Abbrechen der Hartmetallplättchen führen.

Bisherige Ansätze, diese Problematik zu beseitigen, bestehen in einer laufenden oder periodischen Entfernung von in den Innenraum des Metallrohrs oder Hohlprofils gefallenen Sägespänen. Hierzu wird beispielsweise eine Flüssigkeit, insbesondere eine Öl-Wasser-Emulsion, durch das Metallrohr oder Hohlprofil geleitet, um die hereingefallenen Sägespäne hinauszuschwemmen. Hierfür werden allerdings verhältnismäßig große Flüssigkeitsmengen benötigt, die zur Verfügung gestellt und insbesondere aufgefangen werden müssen, wobei Bandsägemaschinen üblicherweise zumindest für letzteres nicht ausgelegt sind. Der hiermit verbundene erhöhte Reinigungsaufwand und das Bereitstellen der Flüssigkeit erhöhen die Betriebskosten signifikant.

Ein anderer Ansatz besteht darin, die in das Innere des Metallrohrs oder Hohlprofils gefallenen Späne kontinuierlich oder periodisch mittels Druckluft auszublasen. Auch dies ist nicht frei von Nachteilen, da die Gefahr besteht, dass ausgeblasene Sägespäne in schwer zu reinigende Bereiche der Bandsägemaschine oder in Bereiche gelangen, die von Sägespänen freigehalten werden müssen. Je nach Länge der zu sägenden Werkstücke ist es darüber hinaus schwierig, die Druckluft an den Ort des Sägeschnitts zu bringen; da die Druckluft im Inneren des Metallrohrs bzw. Hohlprofils wirken muss, sind mitunter relativ lange Lanzen notwendig, die entsprechend schwer zu handhaben und zu positionieren sind.

Ein Absaugen der in das Innere des Metallrohrs oder Hohlprofils gefallenen Späne weist entsprechende Nachteile auf, da auch hier eine Absaugöffnung im Inneren des Metallrohrs oder Hohlprofils an den Ort des Sägeschnitts gebracht werden muss. Darüber hinaus sind entsprechende Vorrichtungen zum Erzeugen eines Vakuums und Auffangeinrichtungen für die abgesaugten Sägespäne notwendig.

Ausgehend von diesem Stand der Technik liegt der vorliegenden Erfindung die Aufgabe zugrunde, ein Verfahren und eine Bandsägemaschine zum Sägen eines Metallrohrs oder Hohlprofils der eingangs genannten Art vorzuschlagen, mit denen die beschriebenen Probleme vermieden werden können.

Gelöst ist diese Aufgabe durch ein Verfahren mit den Merkmalen des Patentanspruchs 1 sowie durch eine Bandsägemaschine mit den Merkmalen des Patentanspruchs 4. Bevorzugte Weiterbildungen des erfindungsgemäßen Verfahrens finden sich in den Ansprüchen 2 und 3; vorteilhafte Ausgestaltungen der erfindungsgemäßen Bandsägemaschine sind in den Ansprüchen 5 bis 7 niedergelegt.

Die im Stand der Technik bestehenden Probleme beim Sägen eines Metallrohrs oder Hohlprofils werden erfindungsgemäß also dadurch beseitigt, dass mit einer Vorschubbewegung gesägt wird, deren Richtung im Wesentlichen entgegen der Richtung der Schwerkraft verläuft. Die erfindungsgemäße Bandsägemaschine ist dementsprechend mit einem Antrieb zum Anheben des Sägenoberteils gegen die Schwerkraft und gegen die beim Sägeschnitt wirkenden Schnittkräfte ausgebildet. In der Regel ist das Sägeband dann solcherart im Sägenoberteil geführt, dass die Sägezähne beim Sägeschnitt im Wesentlichen nach oben, gegen die Schwerkraft orientiert sind, so dass die Vorschubbewegung vom Sägetisch ausgehend im Wesentlichen nach oben gerichtet durchgeführt werden kann.

Im Wesentlichen nach oben bzw. entgegen der Schwerkraft bedeutet im Zusammenhang der vorliegenden Erfindung, dass das Sägeband beim Sägeschnitt aufgrund der entsprechenden Vorschubbewegungsrichtung beim Eintritt in den Innenraum des Metallrohrs oder Hohlprofils zuerst denjenigen Bereich dieses Innenraums durchläuft, in dem sich heruntergefallene Sägespäne sammeln. Zu diesem Zeitpunkt sind dann noch keine oder wenige erste Sägespäne vorhanden, während beim weiteren Fortschritt des Sägeschnitts dieser Bereich von den Sägezähnen des Sägebands nicht mehr durchlaufen wird. Die Vorschubbewegung muss also nicht direkt nach oben gerichtet sein; im Rahmen der vorliegenden Erfindung reicht es aus, wenn eine nach oben gegen die Schwerkraft gerichtete Komponente der Richtung der Vorschubbewegung vorhanden und so ausgeprägt ist, dass derjenige Bereich des Innenraums des Metallrohrs oder Hohlprofils, in dem sich Sägespäne sammeln, gleich zu Beginn des Sägeschnitts durchlaufen wird.

Erfindungsgemäß wird also in der Regel zuerst der unten liegende Bereich des Metallrohrs oder Hohlprofils gesägt, wobei der Sägefortschritt im Wesentlichen von unten nach oben verläuft. Zu Beginn des Sägeschnitts liegen naturgemäß noch keine Sägespäne im Inneren des Metallrohrs oder Hohlprofils. Die im weiteren Verlauf des Sägeschnitts anfallenden Sägespäne fallen dann weiterhin teilweise in den Innenraum des Metallrohrs oder Hohlprofils und bleiben dort liegen. Aufgrund der im Wesentlichen entgegen der Schwerkraft gerichteten Vorschubbewegung des Sägebands verlassen jedoch die Sägezähne diesen Bereich schon zu Beginn des Sägeschnitts nach oben; das Sägeband bewegt sich aus dem Bereich der angesammelten Sägespäne heraus. Diese stören somit im weiteren Verlauf des Sägeschnitts nicht weiter, so dass sich aufwändige Maßnahmen zum Ausschwemmen oder Ausblasen der Sägespäne erübrigen.

Normalerweise befindet sich der Bereich des Metallrohrs oder Hohlprofils, in dem sich die Sägespäne in dessen Innenraum sammeln, am tiefsten Punkt des Metallrohrs bzw. Hohlprofils, in der Nähe des Sägetischs. Daher wird die Vorschubbewegung in der Regel erfindungsgemäß vom Sägetisch ausgehend im Wesentlichen nach oben gerichtet durchgeführt. Hierfür ist es dann bevorzugt, wenn das Sägeband in einer Ausnehmung im Sägetisch geführt wird, bevor die Vorschubbewegung beginnt. Denn das Sägeband muss in diesem Fall unterhalb der Auflageebene auf dem Sägetisch an das Metallrohr bzw. Hohlprofil herangeführt werden.

Das Sägenoberteil der erfindungsgemäßen Bandsägemaschine ist bevorzugt, wie an sich bekannt, mit Bandführungen versehen, die das Sägeband in die Ebene des Sägeschnitts orientiert führen. Gemäß der vorliegenden Erfindung, bei der die Vorschubbewegung für den Sägeschnitt im Wesentlichen gegen die Schwerkraft durchgeführt wird, ist es zweckmäßig, wenn diese Bandführungen nach oben offen ausgebildet sind, um das Sägeband mit nach oben orientierten Sägezähnen führen zu können.

Um zu ermöglichen, dass das Sägeband der erfindungsgemäßen Bandsägemaschine von unten an das Metallrohr oder Hohlprofil herangeführt werden kann, ist es bevorzugt, wenn der Sägetisch eine Ausnehmung zum Durchführen des Sägebands vor Beginn der Vorschubbewegung aufweist.

Anhand der beiliegenden Zeichnungen wird die Erfindung im Folgenden beispielhaft mit einer konkreten Ausführung beschrieben. Es zeigen:
- Figur 1: eine schematische Darstellung einer Bandsägemaschine;
- Figur 2: eine schematische Frontansicht des Sägetischs mit aufliegendem Metallrohr beim Sägevorgang nach dem Stand der Technik;
- Figur 3: eine Darstellung wie Figur 2, jedoch bei einem Sägevorgang gemäß der vorliegenden Erfindung.

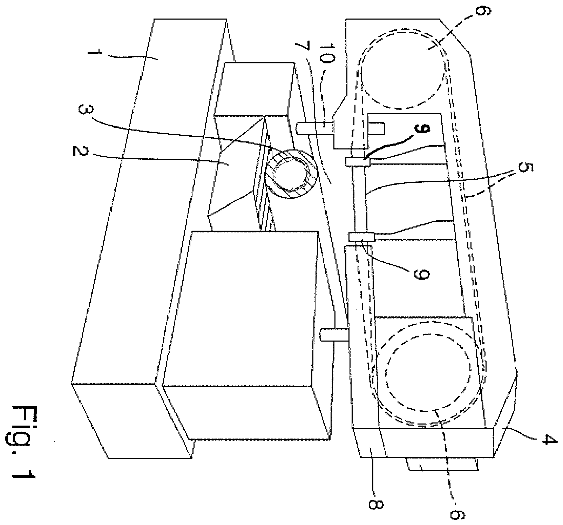

Die in Figur 1 schematisch dargestellte Bandsägemaschine umfasst ein Sägenunterteil 1, einen darauf angebrachten Sägetisch 2 für ein zu sägendes Metallrohr 3 und ein gegenüber dem Sägenunterteil 1 bewegliches Sägenoberteil 4. Im Sägenoberteil 4 läuft ein Sägeband 5 endlos um zwei Laufräder 6 um. In einem Schneidbereich 7 verläuft das Sägeband 5 außerhalb eines Gehäuses 8, und es wird dort mittels zweier Bandführungen 9, die rechts und links des Schneidbereichs 7 angeordnet sind, geführt. Mittels dieser Bandführungen 9 wird das Sägeband 5 aus einer horizontalen Orientierung, mit der es um die Laufräder 6 umläuft, in eine vertikale Orientierung im Schneidbereich 7 gebracht. Das Sägenoberteil 4 sitzt auf Säulenführungen 10 und ist gegenüber dem Sägenunterteil 1 auf und ab bewegbar.

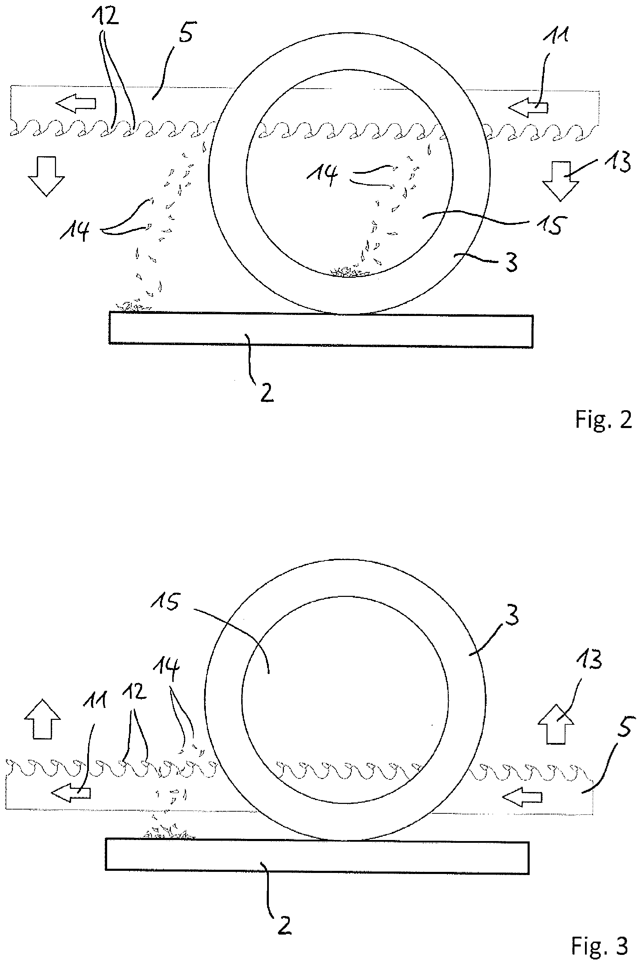

Figur 2 zeigt einen konventionellen Sägevorgang, also ein Verfahren zum Sägen des Metallrohrs 3 nach dem Stand der Technik. Hier wird das Sägeband 5, das in einer Bewegungsrichtung 11 angetrieben ist, von oben auf das Metallrohr 3 abgesenkt, bis seine Sägezähne 12 in das Metallrohr 3 eindringen. Mittels einer von oben nach unten gerichteten Vorschubbewegung 13 durchtrennt das Sägeband 5 das Metallrohr 3 in einem Sägeschnitt, der am Sägetisch 2 endet.

Während des Sägeschnitts fallen Sägespäne 14 von den Sägezähnen 12 nach unten. Wie aus Figur 2 ersichtlich, fallen diese zum Teil außerhalb des Metallrohrs 3 auf den Sägetisch 2, zum Teil jedoch auch in einen Innenraum 15 des Metallrohrs 3, in dessen unterem Bereich sie sich ansammeln.

Wie anhand Figur 2 klar wird, bewegt sich das Sägeband 5 mit zunehmendem Sägefortschritt nach unten und gelangt hierbei letztlich in denjenigen Bereich des Innenraums 15 des Metallrohrs 3, in dem sich die Sägespäne 14 angesammelt haben. An diesem Punkt besteht das Problem, dass die Sägezähne 12 des Sägebands 5 die angesammelten Sägespäne 14 mitnehmen und in den Schnittkanal im Metallrohr 3 hineinziehen, so dass sich dort die Qualität der Schnittoberfläche verschlechtert und sich die Gefahr von Beschädigungen der Sägezähne 12, zumindest jedoch ein erhöhter Verschleiß derselben ergibt. Dies kann nur durch Ausschwemmen oder Ausblasen der Sägespäne 14 oder auch durch manuelles Reinigen bei Stillstand der Maschine verhindert werden.

Figur 3 zeigt in einer Darstellung wie Figur 2 den entscheidenden Unterschied der erfindungsgemäßen Verfahrens zum Stand der Technik. Hier wird die Vorschubbewegung 13 umgekehrt, so dass sie von unten nach oben verläuft. Dementsprechend ist auch das Sägeband 5 von den Bandführungen 9 nicht so umgelenkt worden, dass dessen Sägezähne 12 wie üblich nach unten weisen, sondern so wie gezeigt, so dass die Sägezähne 12 nach oben, vom Sägetisch 2 weg gerichtet, gegen die Richtung der Schwerkraft weisen.

Da erfindungsgemäß von unten nach oben gesägt wird, dringen die Sägezähne 12 des Sägebands 5 zunächst von unten in den untersten Bereich des Metallrohrs 3 ein und trennen diesen während des Sägeschnitts, wodurch zunächst keine Sägespäne 14 in den Innenraum 15 des Metallrohrs 3 fallen können. Sobald der Sägeschnitt so weit fortgeschritten ist, dass das Sägeband 5 durch den Innenraum 15 des Metallrohrs 3 hindurchläuft, bewegen sich die Sägezähne 12 in Richtung der Vorschubbewegung 13 nach oben vom Bereich weg, in dem sich Sägespäne 14 im Innenraum 15 des Metallrohrs 3 sammeln können. Dementsprechend besteht die Gefahr, beim Wiedereintritt des Sägebands 5 in das Metallrohr 3, Sägespäne 14 mit in den Schnittkanal mitzunehmen, höchstens ganz kurz. Schon in der in Figur 2 dargestellten Situation ist diese Gefahr nicht mehr gegeben. Herunterfallende Sägespäne 14, die sich im Inneren des Metallrohrs 3 sammeln, stören beim weiteren Fortschritt des Sägeschnitts nicht weiter und müssen deshalb auch nicht aufwändig entfernt werden.

An dieser Stelle sei nochmals angemerkt, dass die erfindungsgemäße Vorschubbewegung insbesondere dann, wenn Metallrohre oder Hohlprofile mit nicht zylindrischem Querschnitt gesägt werden, von der im Ausführungsbeispiel dargestellten vertikalen Richtung abweichen können, ohne den Rahmen der vorliegenden Erfindung zu verlassen. Wichtig ist jeweils nur, dass derjenige Bereich des Innenraums des Metallrohrs bzw. Hohlprofils, in dem sich beim Sägeschnitt herunterfallende Sägespäne ansammeln können, im Wesentlichen zu Beginn des Sägeschnitts von den Sägezähnen des Sägebands durchlaufen wird, also bereits dann, wenn erste Sägespäne in den Innenraum fallen.

## Patentansprüche

1. Verfahren zum Sägen eines Metallrohrs oder Hohlprofils mit einer Bandsägemaschine, die ein feststehendes Sägenunterteil (1) mit einem Sägetisch (2) zum Auflegen und Fixieren eines zu sägenden Metallrohrs (3) oder Hohlprofils sowie ein relativ zum Sägenunterteil (1) bewegliches Sägenoberteil (4) mit einem umlaufenden Sägeband (5) aufweist, wobei das umlaufende Sägeband (5) mittels einer Vorschubbewegung (13) des Sägenoberteils (4), die relativ zum Sägenunterteil (1) erfolgt, in das Metallrohr (3) oder Hohlprofil eindringt und für einen Sägeschnitt durch dieses hindurchgeführt wird,
**dadurch gekennzeichnet,**
**dass** die Vorschubbewegung (13) im Wesentlichen entgegen der Schwerkraft durchgeführt wird.

2. Verfahren nach Anspruch 1,
**dadurch gekennzeichnet,**
**dass** die Vorschubbewegung (13) vom Sägetisch (2) ausgehend im Wesentlichen nach oben gerichtet erfolgt.

3. Verfahren nach Anspruch 2,
**dadurch gekennzeichnet,**
**dass** das Sägeband (5) in einer Ausnehmung im Sägetisch (2) geführt wird, bevor die Vorschubbewegung (13) beginnt.

4. Bandsägemaschine zum Sägen eines Metallrohrs oder Hohlprofils, umfassend ein feststehendes Sägenunterteil (1) mit einem Sägetisch (2) zum Auflegen und Fixieren eines zu sägenden Metallrohrs (3) oder Hohlprofils und ein relativ zum Sägenunterteil (1) bewegliches Sägenoberteil (4) mit einem umlaufenden Sägeband (5), das mit einer Reihe von Sägezähnen (12) bestückt ist, sowie mit Mitteln zum Erzeugen einer relativ zum Sägenunterteil (1) erfolgenden Vorschubbewegung (13) des Sägenoberteils (4), um ein Eindringen der Sägezähne (12) des Sägebands (5) in das Metallrohr (3) oder Hohlprofil und einen Sägeschnitt zu bewirken,
**dadurch gekennzeichnet,**
**dass** die Mittel zum Erzeugen der Vorschubbewegung (13) als Antrieb zum Anheben oder Verschwenken des Sägenoberteils (4) gegen die Schwerkraft und zusätzlich gegen die beim Sägeschnitt wirkenden Schnittkräfte ausgebildet sind.

5. Bandsägemaschine nach Anspruch 4,
daurch gekennzeichnet,
dass das Sägeband (5) solcherart im Sägenoberteil (4) geführt ist, dass die Sägezähne (12) beim Sägeschnitt im Wesentlichen nach oben, gegen die Schwerkraft, orientiert sind.

6. Bandsägemaschine nach einem der Ansprüche 4 oder 5,
**dadurch gekennzeichnet,**
**dass** das Sägenoberteil (4) mit Bandführungen (9) versehen ist, die das Sägeband (5) in die Ebene des Sägeschnitts orientiert führen, wobei die Bandführungen (9) nach oben offen ausgebildet sind, um das Sägeband (5) mit im Wesentlichen nach oben weisenden Sägezähnen (12) zu führen.

7. Bandsägemaschine nach mindestens einem der Ansprüche 4 bis 6,
**dadurch gekennzeichnet,**
**dass** der Sägetisch (2) eine Ausnehmung zum Durchführen des Sägebands (5) vor Beginn der Vorschubbewegung (13) aufweist.

## Claims

1. Method for sawing a metal pipe or hollow profile with a bandsaw machine which has a stationary saw lower part (1) having a saw bench (2) for positioning and fixing a metal pipe (3) or hollow profile to be sawn, and a saw upper part (4) which is movable relative to the saw lower part (1) and has a circulating bandsaw blade (5), wherein by means of a feed motion (13) of the saw upper part (4), which takes place relative to the saw lower part (1), the circulating bandsaw blade (5) penetrates into the metal pipe (3) or hollow profile and, for a saw cut, is guided through the latter,
**characterised in that**
the feed motion (13) is carried out substantially in opposition to the force of gravity.

2. Method according to claim 1,
**characterised in that**
the feed motion (13) is effected in a substantially upward direction starting from the saw bench (2).

3. Method according to claim 2,
**characterised in that**
the bandsaw blade (5) is guided in a recess in the saw bench (2) before the feed motion (13) commences.

4. Bandsaw machine for sawing a metal pipe or hollow profile, comprising a stationary saw lower part (1) having a saw bench (2) for positioning and fixing a metal pipe (3) or hollow profile to be sawn, and a saw upper part (4) which is movable relative to the saw lower part (1) and has a circulating bandsaw blade (5) equipped with a row of saw teeth (12), and having means for generating a feed motion (13) of the saw upper part (4) which takes place relative to the saw lower part (1) in order to effect penetration of the saw teeth (12) of the bandsaw blade (5) into the metal pipe (3) or hollow profile and make a saw cut,
**characterised in that**
the means for generating the feed motion (13) are configured as drive means for lifting or pivoting the saw upper part (4) against the force of gravity and, in addition, against cutting forces acting during the saw cut.

5. Bandsaw machine according to claim 4,
**characterised in that**
the bandsaw blade (5) is guided in the saw upper part (4) in such a way that during the saw cut the saw teeth (12) are oriented substantially upwards, against the force of gravity.

6. Bandsaw machine according to either one of claims 4 and 5,
**characterised in that**
the saw upper part (4) is provided with blade guides which guide the bandsaw blade (5) so as to be oriented into the plane of the saw cut, wherein the blade guides (9) are configured so as to be open towards the top in order to guide the bandsaw blade (5) with saw teeth (12) pointing substantially upwards.

7. Bandsaw machine according to at least one of claims 4 to 6,
**characterised in that**
the saw bench (2) has a recess for passage of the bandsaw blade (5) before commencement of the feed motion (13).

## Revendications

1. Procédé de sciage d'un tube métallique ou d'un profilé creux avec une scie à ruban, qui présente une partie inférieure de scie fixe (1) avec une table de sciage (2) pour déposer et fixer un tube métallique (3) ou un profilé creux à scier ainsi qu'une partie supérieure de scie (4) mobile par rapport à la partie inférieure de scie (1) avec un ruban de scie tournant (5), dans lequel le ruban de scie tournant (5) pénètre dans le tube métallique (3) ou le profilé creux au moyen d'un mouvement d'avance (13) de la partie supérieure de scie (4), qui se produit par rapport à la partie inférieure de scie (1), et est conduit à travers celui-ci pour une coupe à la scie, **caractérisé en ce que** l'on effectue le mouvement d'avance (13) essentiellement à l'encontre de la force de pesanteur.

2. Procédé selon la revendication 1, **caractérisé en ce que** le mouvement d'avance (13) est essentiellement dirigé vers le haut à partir de la table de sciage (2).

3. Procédé selon la revendication 2, **caractérisé en ce que** l'on guide le ruban de scie (5) dans un évidement dans la table de sciage (2), avant que le mouvement d'avance (13) commence.

4. Scie à ruban destinée à scier un tube métallique ou un profilé creux, comprenant une partie inférieure de scie fixe (1) avec une table de sciage (2) pour déposer et fixer un tube métallique (3) ou un profilé creux à scier et une partie supérieure de scie (4) mobile par rapport à la partie inférieure de scie (1) avec un ruban de scie tournant (5), qui est garni d'une série de dents de scie (12), ainsi que des moyens pour produire un mouvement d'avance (13) de la partie supérieure de scie (4) par rapport à la partie inférieure de scie (1), afin d'effectuer une pénétration des dents de scie (12) du ruban de scie (5) dans le tube métallique (3) ou le profilé creux et de réaliser une coupe à la scie, **caractérisée en ce que** les moyens pour produire le mouvement d'avance (13) sont réalisés sous la forme d'un entraînement pour soulever ou basculer la partie supérieure de scie (4) à l'encontre de la force de pesanteur et en outre à l'encontre des forces de coupe agissant lors du sciage.

5. Scie à ruban selon la revendication 4, **caractérisée en ce que** le ruban de scie (5) est guidé dans la partie supérieure de scie (4) de telle manière que les dents de scie (12) soient orientées essentiellement vers le haut, à l'encontre de la force de pesanteur, lors du sciage.

6. Scie à ruban selon une des revendications 4 ou 5, **caractérisée en ce que** la partie supérieure de scie (4) est munie de guides de ruban (9), qui guident le ruban de scie (5) de façon orientée dans le plan du trait de scie, dans laquelle les guides de ruban (9) sont ouverts vers le haut, afin de guider le ruban de scie (5) avec les dents de scie (12) orientées essentiellement vers le haut.

7. Scie à ruban selon au moins une des revendications 4 à 6, **caractérisée en ce que** la table de sciage (2) présente un évidement pour le passage du ruban de scie (5) avant le commencement du mouvement d'avance (13).
